# EUROPÄISCHE PATENTSCHRIFT

(11) **EP 1 616 174 B1**
(45) Veröffentlichungstag und Bekanntmachung des Hinweises auf die Patenterteilung: **02.11.2016**
(21) Anmeldenummer: 04725944.5
(22) Anmeldetag: 06.04.2004
(51) Int. Cl.: G01N 27/419, G01N 27/406

(54) **VERFAHREN ZUM BETREIBEN EINES GASSENSORS**
METHOD FOR OPERATING A GAS SENSOR
PROCEDE PERMETTANT DE FAIRE FONCTIONNER UN DETECTEUR DE GAZ

(30) Priorität: 11.04.2003 DE 10316645
(43) Veröffentlichungstag der Anmeldung: 18.01.2006
(73) Patentinhaber: ROBERT BOSCH GMBH, 70442 Stuttgart (DE)
(72) Erfinder: CRAMER, Berndt, 71229 Leonberg (DE); TIEFENBACH, Andy, 71254 Ditzingen (DE); SCHUMANN, Bernd, 71277 Rutesheim (DE); OCHS, Thorsten, 71701 Schwieberdingen (DE); SCHICHLEIN, Helge, 76137 Karlsruhe (DE)
(86) Internationale Anmeldenummer: PCT/EP2004/050455
(87) Internationale Veröffentlichungsnummer: WO 2004/090524

(56) Entgegenhaltungen:
- EP-A- 0 427 958
- WO-A-02/079769
- US-A- 5 632 883
- US-A1- 2002 157 452

## Beschreibung

### Stand der Technik

### Stand der Technik

Die Erfindung geht aus von einem Verfahren zum Betreiben eines Gassensors nach der Gattung des unabhängigen Anspruch.

In dem Fachbuch "Otto-Motor - Management / Bosch", Verlag Vieweg, 1. Aufl., 1998, Seiten 22-23, ist ein Breitband-Lambda-Sensor beschrieben, der eine Sensorkammer aufweist, die über eine Diffusionsbarriere mit einem Gasraum verbunden ist. In der Sensorkammer ist eine innere Pumpelektrode angeordnet, die mit einer äußeren Pumpelektrode und einem zwischen den Pumpelektroden liegenden Sauerstoffionen leitenden Elektrolyten eine Pumpzelle bildet. Mit der Pumpzelle können Sauerstoffionen des Gases durch den Elektrolyten aus der Sensorkammer heraus oder in die Sensorkammer hineingepumpt werden.

Neben der Pumpzelle ist eine Messzelle vorhanden, die zwischen der inneren Pumpelektrode und einer Referenzgaselektrode liegt, wobei zwischen der inneren Pumpelektrode und der Referenzgaselektrode ebenfalls ein Sauerstoffionen leitender Elektrolyt angeordnet ist. Die Messzelle entspricht einer NernsLzelle, bei der die sich im thermodynamischen Gleichgewicht zwischen der inneren Pumpelektrode und der Luftreferenzelektrode ausbildende Potenzialdifferenz dem Logarithmus des Verhältnisses des Partialdrucks des zu untersuchenden Gases in der Sensorkammer und des Partialdrucks des zu untersuchenden Gases in der Luftreferenz proportional ist.

Eine in analoger Schaltungstechnik realisierte Schaltungsanordnung hat die Aufgabe, den Sauerstoffpartialdruck in der Sensorkammer derart zu beeinflussen, dass das Nemstpotenzial konstant auf einem vorgegebenen Wert bleibt. Die Schaltungsanordnung ändert zu diesem Zweek einen elektrischen Pumpstrom, mit dem die äußere Pumpelektrode beaufschlagt ist. Die Polarität und der Betrag des Pumpstroms hängen davon ab, ob bzw. um welchen Betrag das vorgegebene Nemstpotenzial über- oder unterschritten ist. Der sich einstellende Pumpstrom tritt an einem Arbeitswiderstand als Spannung auf, die ein Maß für die Konzentration des zu untersuchenden Gases ist.

In der DE 36 25 071 A1 ist ein Verfahren zum Betreiben eines Sensors mit veränderlicher Ionenleitfähigkeit sowie eine Vorrichtung zur Durchführung des Verfahrens beschrieben, bei welchem der Sensor in zyklisch ablaufenden Vorgängen impulsartig mit einem von einer Konstantstromquelle gelieferten Strom beaufschlagt wird. Die sich ergebende Spannung am Sensor ist ein Maß für die relative Luftfeuchte, welcher der Sensor ausgesetzt ist. Die impulsartige Zuführung des Stroms vermeidet Polarisationseffekte an den Elektroden des Sensors. Die Verwendung eines konstanten Stroms, der eine wechselnde Polarität aufweisen kann, ermöglicht eine einfache Auswertung der am Sensorelement auftretenden Sensorspannung.

Der Erfindung liegt die Aufgabe zu Grunde, ein Verfahren zum Betreiben eines Gassensors anzugeben, der eine einfach zu realisierende Schaltungsanordnung enthält, welche eine genaue, drin- und offsetarme Messung ermöglicht.

Die Aufgabe wird durch die im unabhängigen Anspruch angegebenen Merkmale gelöst.

### Vorteile der Erfindung

Erfindungsgemäß ist eine Konstantstromquelle zur Bereitstellung des Pumpstroms vorgesehen. Gemäß einer ersten Alternative ist die Konstantstromquelle auf mehrere vorgebbare Strompegel einstellbar. Gemäß einer zweiten Alternative, die gegebenenfalls zusätzlich zur ersten Alternative vorgesehen sein kann, sieht die Konstantstromquelle einen getakteten Betrieb mit Einschaltphasen und Ausschaltphasen vor, wobei die Dauer der Einschaltphasen und/oder die Dauer der Ausschaltphasen vorgebbar ist.

Das erfindungsgemäße Verfahren kann weit gehend in digitaler Schaltungstechnik realisiert werden. Dadurch ist eine vergleichsweise genaue Erfassung des Pumpstroms und somit des Messsignals möglich. Die in analoger Schaltungstechnik nur mit aufwändigen Maßnahmen in den Griff zu bekommende Fehler durch Drifl und Offset werden weitestgehend vermieden. Weiterhin ist die Erfassung des Pumpstroms unabhängig von einer e-leklrischen Kapazität des Gassensors.

Das erfindungsgemäße Verfahren ermöglicht gemäß der ersten instellung die Vorgabe von unterschiedlichen Beträgen der Konslantströme. In einem stationären Betriebszustand, bei dem sich die Konzentration des zu messenden Gases innerhalb des betrachteten Messzeitraums nicht oder nur unwesentlich ändert, ist der in der Schaltungsanordnung bekannte Konstantstrom identisch mit dem Pumpstrom. Bei den üblicherweise instationären Zuständen kann durch eine einfache Mittelwertbildung über ein zeitlich vorgegebenes Messfenster der Pumpstrom erhalten werden. Die Mittelwertbildung gestaltet sich besonders einfach, da sowohl die Zeiten, in denen der vorgegebene Konstantstrom fließt, als auch der Betrag des Konstantstroms in der Schaltungsanordnung bekannt sind.

Gemäß der zweiten Einstellung, die einen getakleten Betrieb mit Einschallphasen und Ausschaltphasen vorsieht, ermöglicht die Vorgabe eines mittleren Pumpstroms durch eine Variation der Dauer der Einschaltphasen und/oder der Ausschaltphasen.

Durch die Kombination können die Beträge der Konstantströme und die Dauer der Einschaltphasen und/oder Ausschaltphasen flexibel vorgegeben werden. Da die erfindungsgemäße Vorrichtung zum Betreiben des Gassensors eine Regelschleife enthält, die dadurch gegeben ist, dass eine Änderung des Pumpstroms die Mess-Spannung beeinflusst, die ihrerseits wieder zu einer Nachführung des Pumpstroms führen kann, kann durch die erfindungsgemäß vorgesehenen Maßnahmen eine Optimierung des Regelverhaltens im Hinblick auf Genauigkeit und Geschwindigkeit der Regelung erzielt werden.

Das erfindungsgemäße Verfahren kann über standardisierte Schnittstellen direkt von weiteren elektrischen Steuereinheiten angesprochen werden, die nicht Gegenstand der vorliegenden Anmeldung sind. Zusätzliche Schaltungsmaßnahmen sind hierzu nur in geringem Umfang erforderlich. Die in der erfundungsgemäßen Verfahren auftretenden Signale liegen weit gehend in digitaler Form vor, so dass die Signalverarbeitung weitestgehend in einem Rechner stattfinden kann. Dadurch ist eine Miniaturisierung der Schaltungsanordnung bei gleichzeitiger Erhöhung der Funktionalität bzw. der Änderungsmöglichkeit der Funktionalität der Vorrichtung möglich. Eine Anpassung an unterschiedliche Ausführungen von Gassensoren oder eine Anpassung zum Ausgleich von Exemplarstreuungen einer Gassensorserie ist mit Softwareanpassungen in einfacher Weise ohne Änderung der Hardware möglich.

Vorteilhafte Weiterbildungen und Ausgestaltungen des erfindungsgemäßen Verfahrens zum Betreiben eines Gassensors ergeben sich aus abhängigen Ansprüchen.

Eine Ausgestaltung sieht vor, dass die Konstantstromquelle die Vorgabe von Konstantströmen ermöglicht, die sowohl positive als auch negative Polarität aufweist.

Eine Ausgestaltung sieht eine Mittelwertbildung über eine vorgegebene Messzeit vor. Die Mittelwertbildung ermöglicht die Erhöhung der Genauigkeit bei der Erfassung des Pumpstroms insbesondere bei instationären Vorgängen, bei denen Regelvorgänge auftreten. Durch die Anpassung der Messzeit, die einer Tiefpassfilterfunktion entspricht, kann gleichzeitig eine Glättung des zeitlichen Verlaufs des Pumpstroms vorgenommen werden.

Das erfindungsgemäße Verfahren gestattet die Ermittlung des Pumpstroms durch einfache Zählvorgänge. Bei vorgegebenem Strompegel und vorgegebener Dauer der Einschaltphasen und/oder der Ausschaltphasen ergibt die Zählung der Anzahl der Einschaltphasen oder der Ausschaltphasen innerhalb der vorgegebenen Messzeit unmittelbar ein Maß für den Pumpstrom wieder. Eine Regelung der Mess-Spannung ist durch eine Steuerung der Konstantstromquelle in Abhängigkeit von einem Vergleich zwischen einer vorgegebenen Soll-Messspannung und der Ist-Messspannung möglich. Die analoge MessSpannung wird vorzugsweise in einem Analog-Digital-Wandler in ein Digitalsignal umgesetzt, so dass eine weitestgehende Realisierung des erfindungsgemäßen Verfahrens in digitaler Schaltungstechnik ermöglicht ist.

Eine Weiterbildung des erfindungsgemäßem Verfahrens sieht einen Gassensor vor, der mehrere Pumpzellen enthält, die beispielsweise unterschiedlichen zu untersuchenden Gasen ausgesetzt werden können. Für die mehreren Pumpzellen wird lediglich eine Messzelle benötigt. Durch eine zeitliche Koordination kann ein und dieselbe Konstantstromquelle in zeitlicher Folge sämtliche Pumpzellen mit einem Pumpstrom beaufschlagen. Sofern die sich ergebenden Zeiten für den stromlosen Zustand einiger Pumpzellen zu hohe Werte ergeben, können die Konstantstromquelle sowie deren Steuerung entsprechend mehrfach vorhanden sein. Der zusätzliche Aufwand hält sich dadurch in Grenzen, da die Funktionen in einem Rechner, beispielsweise einem Mikroprozessor, ohne großen Aufwand mehrfach realisierbar sind.

Das erfindungsgemäße Verfahren eignet sich insbesondere zum Betreiben eines Gassensors, der im Abgas einer Brennkraftmaschine angeordnet ist. Die weitestgehende Möglichkeit der Digitalisierung weist bei diesem Einsatz des Gassensors wesentliche Vorteile im Hinblick auf die mit elektromagnetischen Störungen verseuchte Umgebung auf.

Weitere vorteilhafte Weiterbildungen und Ausgestaltungen des erfindungsgemäßen Verfahrens zum Betreiben eines Gassensors ergeben sich aus weiteren abhängigen Ansprüchen und aus der folgenden Beschreibung.

Zeichnung
- Figur 1: zeigt ein Schnittbild durch einen Gassensor,
- Figur 2: zeigt ein Blockschaltbild einer Vorrichtung zum Betreiben des in Figur 1 gezeigten Gassensors und
- Figuren 3a-3c: zeigen Signalverläufe in Abhängigkeit von der Zeit, die in der in Figur 2 gezeigte Anordnung auftreten.

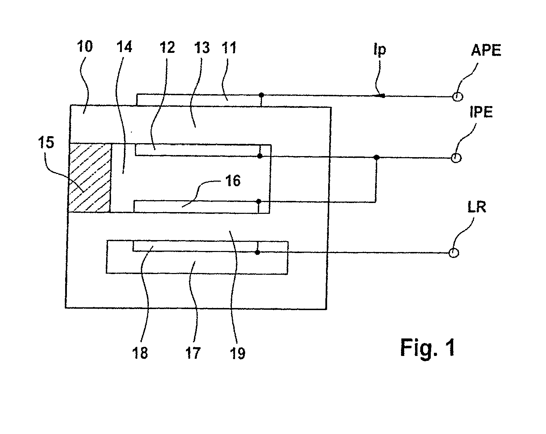

Figur 1 zeigt ein Schnittbild durch einen Gassensor 10, der eine zwischen einer äußeren Pumpelektrode 11 und einer inneren Pumpelektrode 12 angeordnete Pumpzelle 13 enthält. Die innere Pumpelektrode 12 ist in einer Sensorkammer 14 angeordnet, die über eine Diffusionsbarriere 15 mit dem zu messenden Gas beaufschlagt wird. In der Sensorkammer 14 ist weiterhin eine innere Messelektrode 16 angeordnet, die mit einer in einem Gasreferenzraum 17 angeordneten äußeren Messelektrode 18 eine Messzelle 19 bildet.

Die äußere Pumpelektrode 11, die mit einem Pumpelektrodenanschluss APE verbunden ist, wird mit einem Pumpstrom Ip beaufschlagt. Die innere Pumpelektrode 12, die elektrisch mit der inneren Messelektrode 16 verbunden ist, wird an einen Sensorkammeranschluss IPE geführt. Die äußere Messelektrode 18 ist an einen Mess-Signalanschluss LR geführt.

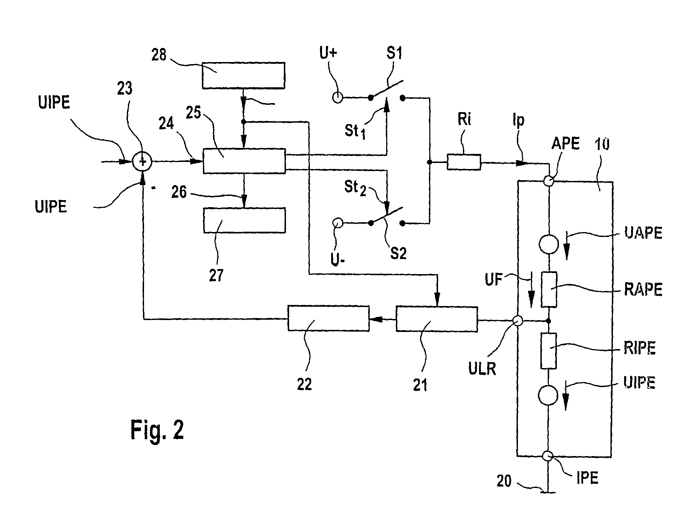

Figur 2 zeigt ein Blockschaltbild einer Vorrichtung zum Betreiben des Gassensors 10. Das elektrische Ersatzschaltbild des Gassensors 10 weist eine zwischen dem Pumpelektrodenanschluss APE und dem Mess-Signalanschluss LR liegende Pumpzellenspannung UAPE und einen Pumpzellenwiderstand RAPE auf. Der Gassensor 10 weist weiterhin eine zwischen dem Mess-Signalanschluss LR und dem Sensorkammeranschluss IPE liegende Messspannung UIPEist und einen Messzellenwiderstand RIPE auf. Der Sensorkammeranschluss IPE ist mit einer Schaltungsmasse 20 verbunden.

Der Mess-Signalanschluss LR, an dem eine Sensorspannung ULR anliegt, ist mit einer Abtast-/Halteschaltung 21 verbunden, der ein Analog-/Digital-Wandler 22 nachgeschaltet ist, der eine digitalisierte Messspannung UIPEistd an einen Vergleicher 23 weiterleitet. Der Vergleicher 23 vergleicht die digitalisierte Messspannung UIPEistd mit einer Sollspannung UIPEsoll und gibt ein Differenzsignal 24 an eine Entscheidungslogik 25 ab. Die Entscheidungslogik 25 gibt ein erstes Schaltsignal Stl an einen ersten Schalter, ein zweites Schaltsignal St2 an einen zweiten Schalter S2 sowie ein Zählsignal 26 an einen Zähler 27 ab.

Der erste Schalter S1 ist mit einer positiven Spannungsquelle U+ und der zweite Schalter mit einer negativen Spannungsquelle U- verbunden. Der erste Schalter S1 kann die positive Spannungsquelle U+ und der zweite Schalter S2 die negative Spannungsquelle U-auf einen Stromquellenwiderstand RI schalten, der mit dem Pumpelektrodenanschluss APE verbunden ist, in welchen der Pumpstrom IP fließt. Zur Steuerung der Abtast-/Halteschaltung 21 und der Entscheidungslogik 25 ist ein Taktgeber 28 vorgesehen, der ein Taktsignal TAKT bereitstellt.

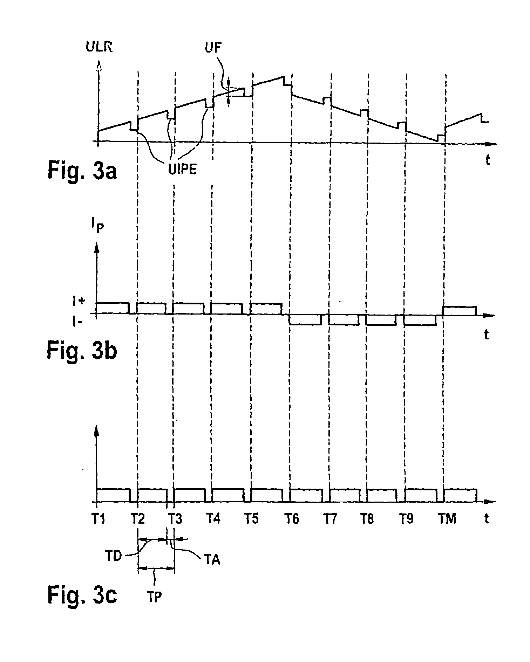

Die Figuren 3a-3c zeigen Signalverläufe in Abhängigkeit von der Zeit t, die in der in Figur 2 gezeigten Vorrichtung auftreten.

Figur 3a zeigt die Sensorspannung ULR in Abhängigkeit von der Zeit t. Die Sensorspannung ULR entsteht aus der Überlagerung der Spannung der Mess-Spannungsquelle UIPEist und einer Fehlerspannung UF, die durch den Spannungsabfall am Pumpzellenwiderstand RAPE auf Grund des Pumpstrom Ip entsteht. Während Einschaltphasen TD bzw. während der Pumpstrom lp fließt, tritt die Fehlerspannung UF auf. Während Ausschaltphasen TA ist der Pumpstrom Ip abgeschaltet, so dass die Mess-Spannung UIPEist als Sensorspannung ULR vorliegt.

Figur 3b zeigt den Pumpstrom Ip in Abhängigkeit von der Zeit t. In einem ersten Zeitintervall, das zwischen einem ersten und einem sechsten Zeitpunkt, T1, T6 liegt. Während der Einschaltphasen TD tritt der Pumpstrom Ip mit einem ersten Betrag I+ auf. Während der Ausschaltphasen TA und während eines Zeitintervalls, das nach dem sechsten Zeitpunkt T6 beginnt und zu einer Messzeit TM endet, ist der Pumpstrom Ip während der Einschaltphasen TD auf einen zweiten Betrag I- festgelegt. Mit dem Auftreten der Messzeit TM ändert sich der Betrag des Pumpstroms Ip während der Einschaltphase TD wieder auf den ersten Betrag I+.

In Figur 3c ist das Taktsignal TAKT in Abhängigkeit von der Zeit t gezeigt Das Taktsignal TAKT weist während der Einschaltphasen TD einen Einschaltpegel und während der Ausschaltphasen TA einen Ausschaltpegel auf. Das Taktsignal TAKT weist eine Periodendauer TP auf. Innerhalb der Periodendauer TP tritt die Einschaltphase TD sowie die Ausschaltphase TA auf.

Die erfindungsgemäßen Vorrichtung zum Betreiben des in Figur 1 schematisch gezeigten Gassensors 10 wird anhand der in den Figuren 3a-3c gezeigten Signalverläufen, die in der in Figur 2 gezeigten Anordnung auftreten, näher erläutert:
Der Gassensor 10 ist beispielsweise im Abgas einer Brennkraftmaschine angeordnet. Der Gassensor 10 detektiert bei dieser Anwendung eine Konzentration einer im Abgas enthaltenen Gaskomponente. Hierbei kann es sich beispielsweise um die Reslsauerstoffkonzentration oder beispielsweise die Stickoxid (NOx)-Konzentration handeln. Die äußere Pumpelektrode 11 sowie die Diffusionsbarriere 15 sind dem zu untersuchenden Gas ausgesetzt. Die Gaskonzentration in der Sensorkammer 14 kann durch einen Gasionentransport durch die Pumpzelle 13 verändert werden. Die Konzentration kann durch Anlegen einer Spannung an den Pumpelektrodenanschluss APE der äußeren Pumpelektrode 11 geändert werden. Auf Grund der Spannung tritt der Pumpstrom Ip auf.

Der Gassensor 10 enthält weiterhin die zwischen der inneren und äußeren Messelektrode 16, 18 ausgebildete Messzelle 19. Mit der Messzelle 19 kann die Konzentration des zu untersuchenden Gases in der Sensorkammer 14 auf Grund eines in der Messzelle 19 auftretenden Gasionenflusses gemessen werden. Die Spannung der Messzelle 19 ist die Mess-Spannung UIPEist, die als Nemstspannung bezeichnet wird. Voraussetzung für die Ausbildung der Nernstspannung ist ein thermodynamisches Gleichgewicht zwischen den Gaskomponenten des zu untersuchenden Gases. Die Konzentrationsmessung erfolgt gegenüber der Gaskonzentration, die im Gasreferenzraum 17 auftritt. Hierbei handelt es sich um einen Raum, der beispielsweise mit Luft gefüllt ist.

Unter der Voraussetzung, dass die Konzentration des zu messenden Gases im Gasreferenzraum 17 höher ist als die Konzentration in der Sensorkammer 14, gilt das in Figur 2 gezeigte Ersatzschaltbild des Gassensors 10. Unter der genannten Voraussetzung liegt das am Mess-Signalanschluss LR auftretende Potential unterhalb von dem am Pumpelektrodenanschluss APE auftretenden Potential, aber oberhalb von dem am Sensorkammeranschluss IPE auftretenden Potential. Die Potentiale werden durch die im Ersatzschaltbild des Gassensors 10 gezeigten Spannungsquellen bestimmt. Die Spannungen der Spannungsquellen, mithin die Mess-Spannung UIPEist sowie die Pumpzellenspannung des UAPE werden durch die Konzentrationsunterschiede an der Messzelle 19 bzw. der Pumpzelle 13 bestimmt, die durch den Pumpstrom Ip beeinflusst werden können.

Die in Figur 2 gezeigte Anordnung hat vorzugsweise die Aufgabe, die Mess-Spannung UIPEist auf die Sollspannung UIPEsoll einzustellen. Die Sollspannung UIPEsoll wird bei einem Gassensor 10, der die Konzentration des Restsauerstoffs im Abgas einer Brennkraftmaschine im thermodynamischen Gleichgewicht erfassen soll, wird beispielsweise auf einen Wert festgelegt, der im Bereich der Luftzahl Lambda von wenigstens näherungsweise = 1 liegt, bei dem sich die Sauerstoffkonzentration bzw. der Sauerstoffpartialdruck um mehrere Zehnerpotenzen ändert. Entsprechend ändert sich die Mess-Spannung UIPEist stark. Die Sollspannung UIPEsoll wird beispielsweise auf einen Wert von 450 mV festgelegt.

Die am Mess-Signalanschluss LR abgreifbare Sensorspannung ULR, die in Figur 3a gezeigt ist, wird vorzugsweise während der Ausschaltphasen TA erfasst. Während der Ausschaltphasen TA des Pumpstroms Ip entfällt die Verfälschung der Spannung durch die Fehlerspannung UF auf Grund des Pumpstroms Ip am Messzellenwiderstand RIPE. Die Abtastung der Sensorspannung ULR erfolgt durch die vom Taktsignal TAKT gesteuerte Ablast-Halteschaltung 21, welcher der Analog-/Digital-Wandler 22 nachgeschaltet ist. Alternativ können die Abtast-Halteschaltung 21 und der Analog-/Digital-Wandler 22 in der Anordnung vertauscht werden, so dass unmittelbar eine Analog-Digital-Wandlung der Mess-Spannung UIPEist vorgesehen sein kann.

Die digitalisierte Mess-Spannung UIPEistd wird im Vergleicher 23 mit der Sollspannung UIPEsoll verglichen. In Abhängigkeit von der Differenz wird das Differenzsignal 24 an die Entscheidungslogik 25 ausgegeben. Die Entscheidungslogik 25 steuert mit dem ersten Schaltsignal St1 oder dem zweiten Schaltsignal St2 entweder den ersten Schalter S1 oder den zweiten Schalter S2 an. Das Schließen des ersten Schalters S1, der mit der positiven Spannungsquelle U+ verbunden ist, führt in Verbindung mit dem Stromquellenwiderstand Ri zu einem Pumpstrom Ip mit der vorgegebenen Amplitude I+, die in Figur 3b gezeigt ist, welche innerhalb eines Zeitintervalls auftritt, das zwischen dem ersten Zeitpunkt T1 und dem sechsten Zeitpunkt T6 liegt. Das erste Steuersignal St1 und somit das Auftreten des Pumpstroms Ip mit dem ersten Betrag I+ tritt während der Einschaltphasen TD auf. Im gezeigten Ausführungsbeispiel sind zwischen dem ersten und sechsten Zeitpunkt T1, T6 fünf Einschaltphasen TD vorgesehen.

Im gezeigten Ausführungsbeispiel soll die Anordnung mit der positiven oder negativen Spannungsquelle U+, U- und dem Stromquellenwiderstand Ri eine schaltbare Konstantstromquelle bilden. An Stelle der gezeigten Ausgestaltungen kann die Konstantstromquelle auch aufwändiger gestaltet werden mit dem Ziel, den Pumpstrom präziser vorgeben zu können. Unter der Voraussetzung, dass der Stromquellenwiderstand Ri erheblich höherohmiger ist als der Innenwiderstand der positiven oder negativen Spannungsquelle U+, U- und der Pumpzellenwiderstand Ri, wird der Pumpstrom Ip im wesentlichen durch die Spannung der positiven oder negativen Spannungsquelle U+, U- und dem Stromquellenwidersland Ri bestimmt. Sofern lediglich ein vorgegebener Betrag des Pumpstroms Ip vorgesehen ist, kann die Konstantstromquelle auf die in Figur 3b gezeigten Strompegel I+, I- festgelegt werden. Durch Änderung der Spannung der positiven und negativen Spannungsquelle U+, U- und/oder des Widerstandswerts des Stromquellenwiderstands Ri können unterschiedliche Strompegel vorgegeben werden.

Beim Schließen des zweiten Schalters S2, der mit der negativen Spannungsquelle U- verbunden ist, tritt in Verbindung mit dem Stromquellenwiderstand Ri der zweite Betrag I-des Pumpstroms Ip auf. Diese Situation ist zwischen dem sechsten Zeitpunkt und der Messzeit TM in Figur 3b gezeigt. Innerhalb des Zeitintervalls treten beispielsweise die gezeigten vier Einschaltdauem TD auf. Im gezeigten Ausführungsbeispiel ist davon ausgegangen, dass zum sechsten Zeitpunkt T6 das Differenzsignal 24 signalisiert, dass die digitalisierte Mess-Spannung UIPEistd die Sollspannung UIPEsoll überstiegen hat, so dass in der dem Zeitpunkt T6 folgenden Periodendauer TP das erste Schaltsignal St1 zurückgenommen und das zweite Schaltsignal St2 während der Einschaltphasen TD zum Schließen des zweiten Schalters S2 ausgegeben wird. Mit dem Auftreten der Messzeit TM ändert sich wieder das Differenzsignal 24. Mit dem Auftreten der Messzeit TM ist eine Regelschwingung abgeschlossen. Eine andere Ausgestaltung des Reglers kann zu einem anderen Verhalten führen.

Auf Grund der weit gehend digitalen Realisierung von Schaltungskomponenten ist eine einfache Ermittlung des Pumpstromes Ip möglich. Der erste und zweite Betrag I+, I- des Stroms der Konstantstromquelle ist durch die Spannung der positiven und negativen Spannungsquelle U+, U- sowie durch den Betrag des Stromquellenwidertands Ri festgelegt. Der Pumpstrom Ip kann durch einen einfachen Zählvorgang der in Figur 3b gezeigten Einschaltphasen TD ermittelt werden, vorausgesetzt, der erste und zweite Betrag I+, I- des Pumpstroms Ip sind gleich groß. Die Zählung erfolgt durch eine Zählung der Einschaltdauern TD, die zwischen dem ersten und sechsten Zeitpunkt T1, T6 auftreten, und eine eine Zählung der Einschaltdauem TD, die zwischen dem sechsten Zeitpunkt T6 und der Messzeit TM auftreten. Anschließend wird die Differenz gebildet.

Im gezeigten Ausführungsbeispiel ist die Messzeit TM, über welche die Summenbildung erfolgt, zufällig gerade einer Regelschwingung gleichgesetzt. Die Messzeit TM kann unabhängig von der Regelschwingung festgelegt werden. Die Messzeit TM gibt die Integrationszeit für die Mittelwertbildung an. Das Ergebnis der Mittelwertbildung ergibt den mittleren Pumpstrom Ip, mit dem die äußere Pumpelektrode 11 beaufschlagt wird. Der Pumpstrom Ip ist unmittelbar ein Maß für die Konzentration des zu untersuchenden Gases, da die Regelung des Pumpstroms Ip in Abhängigkeit von der konstant gehaltenen Mess-Spannung UIPEist geregelt wird. Die Mittelwertbildung kann gleitend erfolgen. Gleitende Mittelwertbildung bedeutet, dass beispielsweise zu jedem Zeitpunkt T1- T9 die Stromimpulse jeweils bis zur gleichermaßen voranschreitenden Messzeit TM summiert werden.

Die Auflösung bei der Ermittlung des mittleren Pumpstroms Ip wird durch die Festlegung der Messzeit TM beeinflusst. Wird beispielsweise die Periodendauer TP auf 0, I ms und die Messzeit TM auf 10 ms festgelegt, so beträgt die Auflösung TM/TP = 100. Der mittlere Pumpstrom Ip kann damit in 1/100-Stufen des maximal möglichen mittleren Pumpstroms IP aufgelöst werden. Der maximal mögliche mittlere Wert des Pumpstroms IP kann dabei 100 *U+*TD/Ri bzw. 100 * U- *TD/Ri betragen.

Durch Abstufung der Einschaltdauern TD und/oder des ersten und/oder zweiten Betrags I+, I-, kann eine Optimierung des Regelverhaltens im Hinblick auf Genauigkeit und Geschwindigkeit, sowie insbesondere Stabilität der Regelung erzielt werden.

Eine Weiterbildung kann vorsehen, dass die Konstantstromquelle U+, S 1, U-, S2, Ri mehrstufig, insbesondere auch mehrstufig für beide Polaritäten, ausgestaltet wird. Sofern das Differenzsignal 24 eine größere Differenz zwischen der Mess-Spannung UlPEist und der Sollspannung UIPEsoll anzeigt, kann für eine oder mehrere Einschaltzeiten TD ein höherer Strombetrag vorgegeben werden, als bei einer kleineren Differenz.

Eine andere Weiterbildung sieht vor, dass die Einschaltphasen TD und/oder die Periodendauer TP variabel vorgegeben werden. In diesem Fall kann bei einer höheren Differenz zwischen der Mess-Spannung UTPEist und der Sollspannung UIPEsoll zunächst für eine oder mehrere Periodendauern TP eine längere Einschaltphase TD vorgegeben werden als bei einer kleineren Differenz.

Eine Ausgestaltung sieht eine Kombination der Weiterbildungen vor, so dass mit einer Änderung der Beträge I+, I- des Pumpstroms Ip sowie einer Änderung der Einschaltphasen TD und/oder der Periodendauern TP die der Pumpelektrode 11 zugeführte Ladungsmenge gemäß dem Produkt Ip * TD in einer Periodendauer TP variabel vorgegeben werden kann.

Bei den Weiterbildungen ist bei der Zählung der Einschaltphasen TD im Zähler 27 die Änderung des Pumpstroms IP auf die anderen Beträge I+, I- sowie die Änderung der Dauer der Einschaltphasen TD zu berücksichtigen.

Eine andere Weiterbildung sieht vor, dass der Gassensor 10 an Stelle der einen Pumpzelle 13 weitere Pumpzellen aufweist. Die einzelnen Pumpzellen können in zeitlicher Folge von der Konstantstromquelle U+, S1, U-, S2, Ri mit dem Pumpstrom Ip beaufschlagt werden. Es können jedoch auch mehrere Konstantstromquellen entsprechend der Anzahl der Pumpstromquellen 13 vorgesehen werden. Zur Vermeidung eines Spannungsabfalls im Gassensor 10 während der Abtastung der Mess-Spannung UIPEist durch die Abtast-Halte-Schaltung 21 ist darauf zu achten, dass die Ausschaltphasen TA für sämtliche Pumpzellen gleichzeitig vorliegt.

## Patentansprüche

1. Verfahren zum Betreiben eines Gassensors (10), der eine Sensorkammer (14) enthält, welche über eine Diffusionsbarriere (15) mit dem zu untersuchenden Gas beaufschlagt ist, der wenigstens eine Pumpzelle (13) enthält, die zwischen der Sensorkammer (14) und dem zu untersuchenden Gas angeordnet ist, und der eine Messzelle (19) enthält, die zwischen der Sensorkammer (14) und dem Referenzgasraum (17) angeordnet ist, bei der eine äußere, dem zu untersuchenden Gas ausgesetzte Pumpelektrode (11) der Pumpzelle (13) mit einem Pumpstrom (1p) beaufschlagt wird, der von einer Mess-Spannung (UIPEist) abhängt, die an einer im Referenzgasraum (17) angeordneten Messelektrode (18) anliegt, wobei eine Konstantstromquelle (U+, S1, U-, S2, Ri) den Pumpstrom (Ip) bereitstellt, wobei die Konstantstromquelle (U+, S1, U-, S2, Ri) auf wenigstens zwei Beträge (I+, I-) des Pumpstroms (Ip) eingestellt wird und dass durch die Konstantstromquelle (U+, S1, U-, S2, Ri) ein wechselnder Betrieb mit Einschaltphasen (TD) und Ausschaltphasen (TA) erfolgt, wobei die Dauer der Einschaltphasen (TD) und/oder der Ausschaltphasen (TA) vorgegeben wird, **dadurch gekennzeichnet, dass** zur Erfassung eines mittleren Pumpstroms (Ip) eine Mittelwertbildung über eine vorgegebene Messzeit (TM) vorgenommen wird und dass bei einem fest vorgegebenen Betrag (I+, I-) des Pumpstroms (Ip) sowie einer vorgegebenen Dauer der Einschaltphase (TD) und/oder Ausschaltphase (TA) die Anzahl der Einschaltdauern (TD) und/order Ausschaltdauern (TA) vorgegeben ist.

2. Verfahren nach Anspruch 1, **dadurch gekennzeichnet, dass** die Konstantstromquelle (U+, S1, U-, S2, Ri) einen Pumpstrom (Ip) mit positiver und negativer Polarität vorgibt.

3. Verfahren nach einem der vorhergehenden Ansprüche, **dadurch gekennzeichnet, dass** die Mess-Spannung (UIPEist) während der Ausschaltphasen (TA) erfasst wird.

4. Verfahren nach einem der vorhergehenden Ansprüche, **dadurch gekennzeichnet, dass** die Konstantstromquelle (U+, S1, U-, S2, Ri) in Abhängigkeit von einem Differenzsignal (24) angesteuert ist, das einen Vergleicher (23) in Abhängigkeit von der Differenz zwischen der Mess-Spannung (UIPEist, UIPEistd) und der Sollspannung (UIPEsoll) ansteuert.

5. Verfahren nach einem der vorhergehenden Ansprüche, **dadurch gekennzeichnet, dass** mehrere Pumpzellen (13) im Gassensor (10) vorgesehen sind und dass jede äußere Elektrode (11) der Pumpzellen (13) mit einem Pumpstrom (Ip) beaufschlagt ist.

6. Verfahren nach einem der vorhergehenden Ansprüche, **dadurch gekennzeichnet, dass** im Referenzgasraum (17) des Gassensors (10) Luft vorhanden ist.

7. Verfahren nach Anspruch 6, **dadurch gekennzeichnet, dass** die Sollspannung (UIPEsoll) auf einen Wert von 300 mV - 700 mV festgelegt ist.

8. Verfahren nach Anspruch 1, **dadurch gekennzeichnet, dass** der Gassensor (10) als Abgassensor ausgebildet ist und dass die äußere Pumpelektrode (11) sowie die Diffusionsbarriere (15) dem Abgas ausgesetzt ist.

## Claims

1. Method for operating a gas sensor (10) which contains a sensor chamber (14), the gas to be examined being applied thereto via a diffusion barrier (15), which contains at least one pump cell (13) arranged between the sensor chamber (14) and the gas to be examined, and which contains a measurement cell (19) which is arranged between the sensor chamber (14) and the reference gas space (17), and in which a pump current (Ip) is applied to an outer pump electrode (11) of the pump cell (13) exposed to the gas to be examined, said pump current depending on a measurement voltage (UIPEactual) present at a measurement electrode (18) arranged in the reference gas space (17), wherein a constant-current source (U+, S1, U-, S2, Ri) provides the pump current (Ip), wherein the constant-current source (U+, S1, U-, S2, Ri) is set to at least two absolute values (I+, I-) of the pump current (Ip) and wherein the constant-current source (U+, S1, U-, S2, Ri) brings about alternate operation with switch-on phases (TD) and switch-off phases (TA), wherein the duration of the switch-on phases (TD) and/or of the switch-off phases (TA) is predefined, **characterized in that** averaging over a predefined measurement time (TM) is performed for the purpose of detecting an average pump current (Ip), and **in that** the number of switch-on durations (TD) and/or switch-off durations (TA) is predefined in the case of a fixedly predefined absolute value (I+, I-) of the pump current (Ip) and a predefined duration of the switch-on phase (TD) and/or switch-off phase (TA).

2. Method according to Claim 1, **characterized in that** the constant-current source (U+, S1, U-, S2, Ri) predefines a pump current (Ip) having positive and negative polarity.

3. Method according to either of the preceding claims, **characterized in that** the measurement voltage (UIPEactual) is detected during the switch-off phases (TA).

4. Method according to any of the preceding claims, **characterized in that** the constant-current source (U+, S1, U-, S2, Ri) is driven depending on a difference signal (24) which drives a comparator (23) depending on the difference between the measurement voltage (UIPEactual, UIPEactuald) and the setpoint voltage (UIPEsetpoint).

5. Method according to any of the preceding claims, **characterized in that** a plurality of pump cells (13) are provided in the gas sensor (10), and **in that** a pump current (Ip) is applied to each outer electrode (11) of the pump cells (13).

6. Method according to any of the preceding claims, **characterized in that** air is present in the reference gas space (17) of the gas sensor (10).

7. Method according to Claim 6, **characterized in that** the setpoint voltage (UIPEsetpoint) is fixed at a value of 300 mV - 700 mV.

8. Method according to Claim 1, **characterized in that** the gas sensor (10) is designed as an exhaust gas sensor, and **in that** the outer pump electrode (11) and the diffusion barrier (15) are exposed to the exhaust gas.

## Revendications

1. Procédé d'utilisation d'un détecteur de gaz (10) qui contient une chambre de détection (14) alimentée en le gaz à étudier par l'intermédiaire d'une barrière de diffusion (15),
le détecteur de gaz contenant au moins une cellule de pompage (13) disposée entre la chambre de détection (14) et le gaz à étudier et une cellule de mesure (19) disposée entre la chambre de détection (14) et l'espace (17) à gaz de référence,
une électrode de pompage (11) de la cellule de pompage (13), exposée au gaz à étudier, étant alimentée en un courant de pompage (Ip) qui dépend d'une tension de mesure (UIPEist) appliquée sur une électrode de mesure (18) disposée dans l'espace (17) à gaz de référence,
une source (U+, S1, U-, S2, Ri) de courant constant délivrant le courant de pompage (Ip),
la source (U+, S1, U-, S2, Ri) de courant constant étant réglée à au moins deux valeurs (I+, I-) du courant de pompage (Ip),
la source (U+, S1, U-, S2, Ri) de courant constant ayant pour effet un fonctionnement alterné avec des phases de branchement (TD) et des phases de débranchement (TA), la durée des phases de branchement (TD) et/ou des phases de débranchement (TA) étant prédéterminée,
**caractérisé en ce que**
pour saisir un courant de pompage (Ip) moyen, une valeur moyenne est formée sur une durée de mesure (TM) prédéterminée et
**en ce que** pour une valeur (I+, I-) prédéterminée de manière fixe du courant de pompage (Ip) et pour une durée prédéterminée de la phase de branchement (TD) et/ou de la phase de débranchement (TA), le nombre des durées de branchement (TD) et/ou des durées de débranchement (TA) est prédéterminé.

2. Procédé selon la revendication 1, **caractérisé en ce que** la source (U+, S1, U-, S2, Ri) de courant constant définit un courant de pompage (Ip) de polarité positive ou de polarité négative.

3. Procédé selon l'une des revendications précédentes, **caractérisé en ce que** la tension de mesure (UIPEist) est saisie pendant les phases de débranchement (TA).

4. Procédé selon l'une des revendications précédentes, **caractérisé en ce que** la source (U+, S1, U-, S2, Ri) de courant constant est commandée en fonction d'un signal différentiel (24) qui est délivré par un comparateur (23) et qui est fonction de la différence entre la tension de mesure (UIPEist), UIPEistd) et la tension de consigne (UIPEsoll).

5. Procédé selon l'une des revendications précédentes, **caractérisé en ce que** plusieurs cellules de pompage (13) sont prévues dans le détecteur de gaz (10) et **en ce que** chaque électrode extérieure (11) des cellules de pompage (13) reçoit un courant de pompage (Ip).

6. Procédé selon l'une des revendications précédentes, **caractérisé en ce que** de l'air est présent dans l'espace (17) à gaz de référence du détecteur de gaz (10).

7. Procédé selon la revendication 6, **caractérisé en ce que** la tension de consigne (UIPEsoll) est définie à une valeur de 300 mV - 700 mV.

8. Procédé selon la revendication 1, **caractérisé en ce que** le détecteur de gaz (10) est configuré comme détecteur de gaz d'échappement et **en ce que** l'électrode extérieure de pompage (11) ainsi que la barrière de diffusion (15) sont exposées aux gaz d'échappement.
